# EUROPEAN PATENT APPLICATION

(11) **EP 0 660 486 A1**
(43) Date of publication of application: **28.06.1995**
(21) Application number: 94119195.9
(22) Date of filing: 06.12.1994
(51) Int. Cl.: H02J 3/14

(54) **Improvement in an electric load management arrangement**

(30) Priority: 23.12.1993 IT PN930078
(71) Applicant: ZELTRON S.p.A., I-33030 Campoformido, Udine (IT)
(72) Inventor: Diodato, Claudio, I-33100 Udine (IT); Milillo, Giovanni, I-34100 Trieste (IT); Rugo, Anna, I-33038 San Daniele, Udine (IT)
(74) Representative: Giugni, Valter

(57) **Abstract**

Arrangement for the management of a plurality of electric loads, preferably in household power-consuming installations, comprising a power supply source and a respective plurality of power distribution points, said arrangement being adapted to keep the total power input to said loads under a pre-determined highest allowable value, and further comprising also a controlled switch and a power sensor for each one of said power distribution points, a processing and control element connected to all of said sensors, and respective connections between said switches and said processing and control element.

Said processing element is provided with a nonvolatile storage memory and is adapted to store a scale of priorities for each one of said power distribution points.

Furthermore, said arrangement is adapted to each time store the last power input value for each one of said power delivery points.

## Description

The present invention refers to the use of a particular arrangement for managing in an optimum way the electric energy absorbed by, ie. the power input to a plurality of distinct and independent electric loads, wherein each one of said electric loads is assigned a different priority and the pre-condition is that a pre-determined highest allowable power input rating is by no way exceeded.

In a quite general way, the present invention is applicable to electric loads having different characteristics and being supplied in a parallel arrangement from a single power supply line. It is however particularly suitable to manage the power input to a plurality of electrical loads such as represented by household power-consuming appliances, and, for greater simplicity and convenience, reference will be made here to such a kind of power-consuming equipment, without this representing any limitation to the actual scope of the present invention.

Strict constraints are known to apply to household and, for that, also many other types of installations concerning the highest allowable power input value, which is in fact physically limited by appropriate automatic magneto-thermal switches that are specially provided in each household or similar installation. It is also a widely accepted fact that the growing number of both small and large home appliances being installed and used within such household installations gives frequently rise to overload problems, whereby said automatic magneto-thermal switches are caused to trip under discontinuance of all electrically operating services. This practically requires that, when such an interruption occurs, only the loads or services being really needed at that moment be selected and allowed to operate, while the power supply must be restored manually.

As a matter of fact, and this is actually the main consideration at the basis of the present invention, usually not all of the functions or tasks performed by the various household appliances have the same priority at any given moment, since, while some tasks may be considered as being of primary importance, other ones are far less so and can therefore be performed later without this giving rise to any particular inconvenience.

Furthermore, if some tasks are important at a given moment, it may occur that they are much less so at any other moment. Many examples might be cited here in this connection. However, it should be sufficient here to just cite the case of a food cooking oven which, once started, should necessarily be allowed to operate, since its duty can by no means be deferred, or, on the other hand, the case of a clothes washing machine which usually can be allowed to operate at any moment during the day and sometimes also during the night. In all such cases appliances are said to have different priorities.

Arrangements have been disclosed, for instance in the European patent application no. 0208597, which are adapted to detect when the overall current being absorbed by a household power-consuming installation is going to exceed the highest allowable value at which the power supply is completely cut out, and to trip so as to immediately exclude the various loads according to a pre-set order of priority until the current being absorbed by those loads that are still energized decreases to a value which is lower than the tripping value at which the whole power supply is automatically cut out.

Such a solution is certainly effective in preventing the power supply from being totally cut out, while at the same time enabling those appliances to be further energized which are performing a task that has been assigned a greater priority as compared with other ones. However, since the order of exclusion is rigid, it may occur that appliances are excluded in such a way as to leave a rather wide margin between the current that is actually absorbed after such an exclusion and the highest allowable power input rating at which the power supply to the whole installation is cut out. In other words, this gives rise to the drawback represented by the fact that also such appliances may happen to be excluded which, although performing tasks with no greater priority than the ones performed by the other excluded appliances, might however be kept energized and operating without this causing any automatic switch to trip for cutting out the power supply.

Even more complex solutions are known in this connection, such as for instance the ones disclosed in the Italian patent application no. PN93A000026.

Such solutions are totally adequate in enabling the management of several variable electric loads to be optimized. However, they are tied to the constraints and the cost-related burdens represented by the need for each appliance in the system to be both provided with own electronic means for storing and controlling the sequence of its operating programme, and connected to a central processing and control apparatus, while such a central processing and control apparatus must be arranged to perform relatively complex functions.

It would therefore be desirable, and it is in fact a main purpose of the present invention, to provide a power supply arrangement, in particular for supplying electrical household appliances, which, while eliminating all of the afore cited drawbacks, is capable of ensuring optimized management of the power input to a plurality of electrical household appliances on the basis of the assigned priorities, may be applied also to already existing electrical household appliances, is simple to construct, and makes use of commonly available techniques and component parts.

The invention will be more readily understood from the description which is given below by way of non-limiting example with reference to the accompanying drawings, in which:

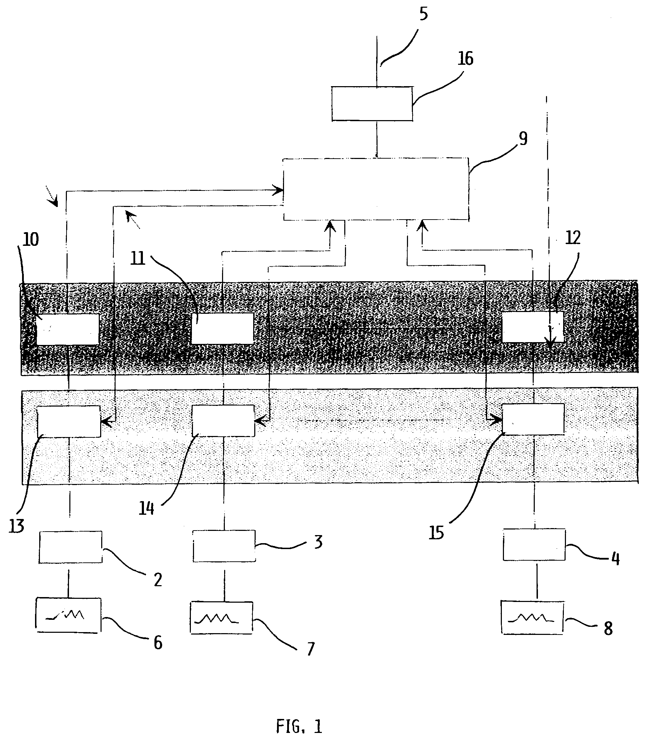

- Figure 1 is a basic schematical view of a distributed power supply circuit according to the present invention;

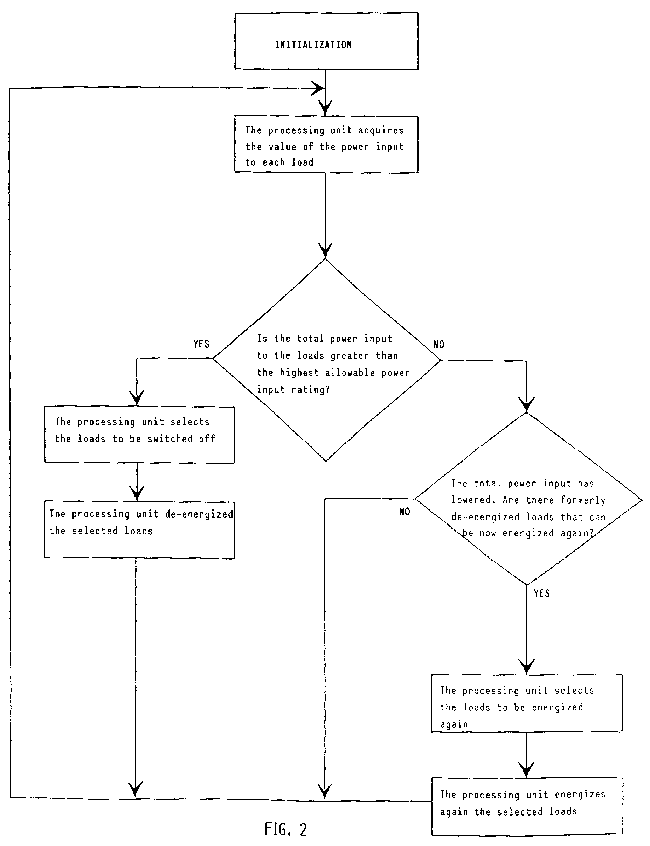

- Figure 2 is a view illustrating the logic block diagram of an arrangement according to the present invention, sauid illustration being self-explaining of the data detection and processing procedure, as well as the resulting control procedure of the appropriate switches.

The arrangement 1 comprises a plurality of power distribution points 2, 3, 4 ... adapted to distribute the power taken from the electric mains 5 to the household appliances represented by the respective loads 6, 7, 8, and a processing and control element 9.

To each one of said power distribution points there is associated:
- a respective power sensor 10, 11, 12 for continuously measuring the instantaneous power input to the respective power distribution point;
- a controlled switch or relay 13, 14, 15 adapted to enable or exclude the passage of current, ie. to switch on or off the power input from the respective power distribution point;
- appropriate electrical connections that connect said sensors and said switches to said processing and control element, the latter being adapted and arranged to operate said switches on the basis of the outcome of its internal processing procedure that will be described later on.

It can be further noticed that the arrangement extends to also include the traditional pre-existing magneto-thermal cut-out switch 16 installed at the entry of the power supply circuit in the home.

An of course different priority is assigned to all of the electrical appliances connected to the home installation according to a particular scale, and the respective power distribution points are identified by and stored in the element 9 with the same priority scale.

The processing and control element 9 is provided with an internal logic which is adapted to process signals and generate commands to the purpose of maximizing at each moment the power input to the appliances , while however complying with the binding requirement of not exceeding the highest allowable total power input value by operating on the basis of the pre-established priorities, in the sense that the power supply is each time enabled to the various power-consuming loads according to their priority, until the highest allowable power input limit is reached. Should, however, a load 6 with a greater priority with respect to a less important or urgent one determine such a power input as to cause the total power input in that moment to exceed the highest allowable power input rating of the home installation, while said lower-priority load (or loads) 7 and 8 would on the contrary determine a total power input that is lower than said highest allowable power input rating, then it is said lower-priority loads that will be actually selected for being supplied, instead of the higher-priority load 6 that is therefore kept de-energized, up to the limit determined by said highest allowable power input rating of the home installation.

The order of precedence in enabling the power supply input to said lower-priority loads 7 and 8 is assigned according to a similar procedure as described above, ie. by observing the order of importance of the tasks performed by the various appliances and making sure, for each situation in which a new load has to be energized, that the highest allowable power input rating of the installation is not exceeded.

Anyway, such a procedure for performing the energization and de-energization of the various loads will be described below in a more detailed way.

The need first of all arises to make clear that the procedure is carried out in two phases, wherein the acquisition of the power inputs as detected and transmitted by the sensors, the simulation of the various operating situations according to the procedure described below, and the selection of the optimum condition are performed in the first phase. All these operations are performed by the element 9 in form of a fully internal processing step needing no command from the outside.

Such a condition as selected in said first phase is then implemented in the second phase of the above cited procedure, when the element 9 starts in fact sending appropriate signals to the switches involved so as to set them in accordance with said selected operating condition.

The procedure may start at any given instant, when the element 9 monitors all of the sensors connected therewith and calculates whether the total power input to the loads is exceeding the highest allowable power input rating at which the power supply to the installation is automatically cut out by the tripping of the cut-out switch; if it turns out that the total power input demand by the loads, as calculated in the above said manner, is going to exceed said highest allowable power input rating, then the element 9 selects to exclude from the power supply one or more loads according to the following logic procedure: the assigned priority is in all cases observed as the basic selection principle, in the sense that the first load whose exclusion is simulated by the system is the load with the lowest priority among all of the loads concerned.

If such first exclusion enables the total power input value to be reduced below said highest allowable power input rating, or limit Pmax, then said element 9 generates an appropriate command that is sends to a corresponding relay to switch off said selected load.

Furthermore, during this phase the element 9 stores in its memory all of the power inputs detected by the various sensors at the respective power distribution points.

In a subsequent instant, said monitoring and calculation procedure as illustrated above is then repeated: if the previously established conditions are found to be unaltered (hence the need for a storage in view of the ability to compare the current data with the former ones), then no variation is caused to intervene in the existing conditions.

If on the contrary any change is detected, the above illuastrated procedure is repeated. Let us assume that the total power input is in this case found to exceed said highest allowable limit Pmax: in such a case, the element 9 works out the new operating conditions, which will consist again in the de-energization of lowest-priority load among the energized one, along with the selection of another lower-priority load among the de-energized ones.

If this new condition is allowed, ie. it does not lead the total power input to exceed the highest allowable limit Pmax, then the element 9 goes again through the just above illustrated procedure to simulate the inclusion of the subsequent lower-priority load.

Such a sequence of checking procedures goes on until a condition is eventually reached which is not allowed, in that said highest allowable power input rating Pmax would be exceeded. At this point, the last load included by the system is excluded, while the procedure is repeated for the remaining lower-priority loads. In such a way, the procedure is repeated iteratively until the possibility is fully investigated of including all possible loads in the power supply scheme according to the principle of decreasing level of priority.

Eventually a power supply connection configuration is reached which is defined by following conditions being met at the same time:
- the total power input is lower than the highest allowable power rating of the home installation;
- within said limit of the highest allowable power rating all possible loads are connected to the power supply on the basis of their level of priority;
- loads with a lower level of priority may be included in a power-supply configuration instead of possible higher-priority loads in the case that said higher-priority loads would determine a total power input in excess of the highest allowable power input rating of the home installation.

Once the final power-supply configuration is defined in the above illustrated way, the same is carried into effect through corresponding signals that the element 9 sends to the appropriate switches as selected in order to implement said configuration.

To the logic objection that may be raised in connection with the practical feasibility of such a procedure, ie. that the same procedure shall be completed in a time which is shorter than the tripping time of the automatic cut-out switch 16 (since said cut-out switch would otherwise cut off the power supply from the mains before the procedure itself is completed), it may be simply replied that the cycle time of the afore described procedure is in any case of an order of a few thousandths of a second, while the tripping time of the automatic cut-out switch amounts to a few seconds, so that it in no way interferes with the correct operation of the described arrangement.

A natural improvement of the present invention lies in automatically monitoring, at a quite high rate of repetition, the power input conditions prevailing at the various sensors, and letting the respective data be at the same time processed according to the described procedure.

A further improvement lies also in the fact that the procedure may be started both automatically and each time that the power input conditions undergo a variation for any reason whatsoever.

It will be appreciated that what has been said and described above with reference to electric power inputs applies also to the case in which said power inputs are substituted for by the respective electric currents, even though home installations are usually supplied with a voltage which is nominally constant, but actually variable within pre-set limits.

Although the invention has been described on the basis of the example represented by some preferred embodiments thereof, and using a generally known terminology, it cannot be considered as been limited by these, since anyone skilled in the art will appreciate that a number of variations and modifications can be further made. The appended claims shall therefore be understood to include such possible modifications as anyone skilled in the art is capable of appreciating, and which do not depart from the scope and the real meaning if the present invention.

## Claims

1. Arrangement for the management of a plurality of electric loads (6, 7, 8), preferably in household power-consuming installations, comprising a power supply source (5) and a respective plurality of power distribution points (2, 3, 4), said arrangement being adapted to keep the total power input to said loads below a pre-determined highest allowable value controlled by an automatic cut-out switch (16), **characterized in that** it includes:
- a controllable switch (13, 14, 15) and a power sensor (10, 11, 12) for each one of said power distribution points;
- a processing and control element (9) connected with all said sensors;
- respective connections between said switches and said processing and control element.

2. Arrangement according to claim 1, **characterized in that** it is provided with a non-volatile storage memory which is adapted to store a scale of priorities for each one of said power distribution points (2, 3, 4).

3. Arrangement according to claim 2, **characterized in that** it automatically and periodically monitors the power input conditions at each one of said power distribution points, and stores the last power input value detected at each one of said points.

4. Arrangement according to claim 2 or 3, **characterized in that** the processing and control element (9) is adapted to compute when the total power input to said loads exceeds said highest allowable power input rating, and to define a power supply configuration according to the following conditions:
- the total power input is lower than the highest allowable power input value;
- within said limit of the highest allowable power value all possible loads are connected to the power supply on the basis of their level of priority;
- one or more loads with a lower level of priority may be included in a power-supply configuration instead of higher-priority loads if each one of said higher-priority loads would determine a total power input in excess of the highest allowable power value of the home installation;
- all those loads are included in a power supply configuration which are able to maximize the resulting total power input, in the sense that the addition of any further lower-priority load would cause the total power input to exceed said highest allowable power value.

5. Arrangement according to claim 4, **characterized in that** it is adapted to send appropriate signals to said switches so as to switch off one or more such switches to implement the defined power supply configuration.

6. Arrangement according to claim 5, **characterized in that** the processing and control element (9) automatically and periodically performs said processing and storage of the power inputs detected at each such power distribution points, the definition of the power supply configuration and the control function for the switches on the basis of the processing of the power inputs detected and stored in the last monitoring sequence.

7. Arrangement according to claim 5 or 6, **characterized in that** the actuation of the switches to implement the defined power supply configuration is completed before the tripping of the automatic cut-out switch (16).

8. Arrangement according to any of the preceding claims from 4 to 7, **characterized in that** the processing and control element automatically calculates again and implements the corresponding configuration specified for each variation in the power input detected at any of said power distribution points.

9. Arrangement according to any of the preceding claims, **characterized in that** said scale of priorities is adapted to be pre-selected and/or changed by the user.
